# EUROPEAN PATENT APPLICATION

(11) **EP 1 422 455 A1**
(43) Date of publication of application: **26.05.2004**
(21) Application number: 01949502.7
(22) Date of filing: 28.06.2001
(51) Int. Cl.: F16K 31/26, F16K 21/18

(54) **MAXIMUM SECURITY HYDROPNEUMATIC FLOAT FOR CISTERNS**

(30) Priority: 29.06.2000 ES 200001614
(71) Applicant: Leon Fernandez, Pablo, 25002 Lerida (ES); Gimeno Castel, Antonia, E-25002 Lérida (ES); Leon Gimeno, Eva, 25005 Lerida (ES); Leon Gimeno, Pilar, 25005 Lerida (ES)
(72) Inventor: LE N FERN NDEZ, Pablo, E-25002 Lerida (ES)
(86) International application number: PCT/ES2001/000258
(87) International publication number: WO 2002/002977

(57) **Abstract**

Maximum security hydropneumatic float for tanks based on the fact that its closure arises on the inside in the direction of the pressure by opening and closing the water passage by means of some disks housed between one another that are crossed by the axle (29) and it moves them along the guides (1) when they open and close, with it being characterised by the fact that said disks cut off from lesser to greater the water passage by only using the force of the first time through the dead spaces on the axle run (27) and (28) which allows the ballcock and its lever to be eliminated and to be able to build it completely out of plastic, a hub (45) supplies itself with water, when the water in the tank (68) drops, the hub falls thereby opening the disks and when the level drops it reaches the air chamber (57) lifting the hub until releasing the disks which then return to their seatings thereby ensuring the closure.

## Description

Maximum-security hydropneumatic float for tanks. The present invention refers to a system whereby significant improvements are achieved in relation to the current systems known till now. These improvements totally change the system for opening and closing the water passage as compared to the traditional floats used in tanks and water supply reservoirs. In the present invention the closure is carried out on the inside with the tendency pertaining to each one of its closure disks, that fall through gravity into their seatings thus enhancing the hermetic nature their seals the pressure of the network itself that the pushes them onto the flat rubber seals, which only sink a few tenths of an inch, since said rubbers are protected in their housings by their base that houses them and that limits the sinking thereof in the bending action that it exercises on them when the pressure of the network is pushing them. This allows the said rubbers not to become worn or to be either, which ends up providing a closure with the maximum security and long duration without water losses. Other advantages are that it eliminates the traditional ballcock. It does not require the installation of a pressure reducer in the network when the latter is high, it opens the highest percentage of the water passage as compared to the models that were used till now for these same purposes, it does away with the great length of the lever that was needed in the traditional ones in order to be able to block the hole from the outside of the water passage by means of the force that the bulky ballcock provides for it and causing large losses of water because the escape is permanent and at the same time its components become worn. In the present apparatus, the system for opening and closing is performed by cutting off the water passage and therefore it does not require special force for this purpose, using the same force at all the times as it uses in the first time, a force that is equal to the one that the three eighths-of an inch (17 mm outer diameter) floats need that are used in the tanks for bathroom WCs. This force is the same one that the rest of disks require for working that complete the action of opening and closing the passage of water, given the system it incorporates. All these innovations allow all the models and those larger than 3/8" (17 mm outer diameter) used for tanks to be made, and that for the first time their manufacture may be completely in plastic, which grants them greater resistance to the adherence of waste that the water contains and cheapens the cost of the manufacture in an extraordinarily advantageous manner.

### BACKGROUND FOR THE INVENTION.

The current systems for filling tanks are well known, that is to say, those with a measurement of 3/8" (17 mm outer diameter) and all the larger ones. All of them consist of the fact that they must be fitted with a lever and a ballcock for closing the water passage when the water level in the tank reaches the ballcock in the said apparatus and the floating action by the ballcock pushes the lever to block the water outlet by means of a flat rubber seal on the outside. This procedure has been used till now especially in the larger ones, it requires lever and ballcock sizes that are capable of sending the force needed for blocking the water passage and when the pressure in the network is high and the outlet of the float must have large diameter, as is the case of the models used that are over one inch up to two and a half, said lever and ballcock sizes must be increased. The closing of all these types apparatus is not very safe and is very slow in the last run of the ballcock, this produces wear and tear both on the surface of the outlet and on the rubber due to the speed at which the water comes out when it is almost semi-enclosed. The impurities that the water contains are fired at great speed onto the closure elements in a short period of time, in months they produce fissures like small cracks both in the rubber and in the outlet, preventing the total closure of the water passage that will continue to flow into the tank until its level reaches the safety hole for preventing overflows and the water begins to flow out to the drains, so causing an increase in the consumption of water in the community of residents where they are installed and that due to their location in hidden places such as the basement in a block of flats or in the top parts thereof or other kinds of establishments. They are not usually detected until the water bill is received with an extraordinary increase. Although with other floats the closure is produce by a gate and they provide a better closure than previous ones, they still require the large lever and ballcock to work the gate that through the friction of the said gate on the inside of the body, the sizes of the lever and ballcock have to be increased even more. These types of apparatus are not known in Europe. Floats have also been made that act with a different system since the closure is performed by one or more valves on the inside of the body, the closure thereof is very reliable because the pressure of the network itself pushes them into their seatings and the closure and the opening are performed by means of a weight that is fitted onto the lever, whether it is provided by part of the very water that flows out through the outlet or by a fixed weight fitted firmly onto the lever. The opening of the valves is caused by means of the water level in the cistern that when the passage of the lever drops, it forces the valves that closed off the passage to rise up from their seating. The limitation of the latter system is that it has only been possible to apply it for sizes that do not exceed more than three eighths of an inch, used preferably in cisterns for WCs, in the ones larger than 3/8" (17 mm outer diameter), it was prevented by the pressure surge that arises when the diameter of the water passage is larger than 6.5 mm and also the resonance with changes of pressure in the network or other circumstances that arise when the water level in the tank is very low at the time of closing or opening the water passage,

With the maximum-security hydropneumatic float for tanks, the system has been developed that allows the ballcock and the long lever to be eliminated. The present float can be installed in networks from zero up to the high pressures that may occur in water supply networks, with a large variety of models in sizes that can cover any need of diameter for networks with tanks and WC cisterns as from 3/8" (17 mm outer diameter) up to those that are used in large water supply reservoirs for cities and whose characteristics are the object of the present invention.

### DESCRIPTION OF THE INVENTION

The maximum security hydropneumatic float for tanks consists of the fact that a system whereby the pressure in the network is reduced on the inside of the body of the apparatus in question by means of the functions that the disks inside it perform and that cut off the water passage. Said disks act by opening and closing the water passage of a lesser to a greater diameter and that are housed therein with the first one on the inside of the second one and the second one on the inside of the third one, with all of them being crossed through by an axle that sticks out at both ends through the walls of the third disk with the aim of penetrating in both guides made on the inside of the body and that houses them a in longitudinal direction in order to allow them to perform movements upwards and downwards. Said disks, by means of the shapes that their holes have, allow the axle that runs over some dead spaces through the inside thereof with the aim of ordering the movements of each one of them for opening and closing. Hence, when the first one opens it releases the water that penetrates into the inside of the body that houses it through the clearances in the following two disks that are housed between each other, this means that pressure cannot be formed on the inside of the body and therefore the following two disks do not offer any resistance when they are lifted up from their seatings by the thrusting action of the rod. This amount of water is equivalent to a diameter of 6 mm equivalent to the water passage for the 3/8" models (17 mm outer diameter) used in cisterns for bathroom WCs. Then the second disk shall begin to open up by rising up from its seating with the same water passage that is being produced and therefore with practically no pressure on the inside of the body. When it rises a few tenths of an inch from its seating, this second disk will begin opening the rectangular transversal hole that is made in the third disk and will go on to release a greater percentage in relation to the first one. It continues its ascent until it drags the 3^{rd} disk by lifting it up from its seating under the same pressure conditions of that this second disk performed before, it continues its rise and the third disk begins to clear the water inlet on the inside of the body that is connected to the network until rising up to the roof on the inside of the body, the instant at which the full opening arises, at that moment the tank begins to fill up at the same time that a small portion of water flows out through a hole made in the cover of the body and it flows out to the inside of the small lever that joins the body to a hub that is also small -that replaces the ballcock-. The water that flows by gravity through the short lever is released into the inside of the hub. Whilst the tank is filling up, the water from the hub flows over into the tank renewing the water that it contained; the water level in the tank rises until reaching the air chamber housed in the hub in its bottom part and then to the hub itself helped by floating on the water in the tank and by the action of the air chamber, it shall continue to rise until it makes the lever swing and with the latter lowering the disks that shall return to their seatings, in reverse order. At that instant the hub is pushed towards the stop that limits its rise through the expansion caused by the air that compressed the chamber and the hub remains slightly sloping towards its inner face, the instant that part of the water from the hub shall be released through the transversal hole that the hub has on its inner face. Once the hub has lost part of its weight, the lever remains in position to rest its cam on the inner part of the rectangular hole in the rod and pulling the disks down to their seatings of closure. This position prevents formations of resonances, both through pressure variations in the network and through the effect that is caused by the very slow drop of the water level in the tank. The amount of water that the hub has released prevents it from dropping until the water level in the tank has dropped below the hub and in the air chamber, at which time the hub with its weight that the water on its inside provides for it, makes the lever swing and begins to open the aforesaid first disk until completing the opening action. Equally, hydropneumatic floater units may be put into practice for installing in networks larger than 2.5" (81 mm outer diameter (with the layout for placing in front a body connected to the network that allows the water passage and from the latter two or more sets are derived, jointly allowing the multiplication of the flow rate into the tank in proportion to the number of units that jointly form the set of units larger than 2.5" (81 mm outer diameter).

The present maximum security hydropneumatic float for tanks and WC cisterns is based on the fact that it has a cylindrical body connected to the network in an upright position, inside of which it has two longitudinal slots by way of guides on which it is housed and an axle is moved and at the bottom it has an inner base for housing the area for the closure of the cover and that at the same time said rubber represents the base for the seating of the second and third disk that are housed inside it (depending on the sizes of the model). A rectangular hole has been made half way up it that provides passage for the water inlet in the network, and in its bottom part it has an area with a thread by means of which it will be joined to the cover.

The cover, through its upper part, is threaded in order to join it to the body. A circular offset has been made on its upper surface in order to couple it to the support that houses the rubber seal for the third disk. In its bottom inner part it is closed with the exception of the water outlet pipe to the tank, the hole through which the rod enter and the small hole that supplies water to the hub in the tank. Along its bottom outer part it has a prolongation of a few centimetres in the water outlet to the tank and the latter in its inner part inferior has a projection on its outer perimeter in order to connect a flexible pipe under pressure that reaches down to the bottom of the tank in order to prevent the noises from filling. Also on the cover, along its outer bottom part in its rear part longitudinal with the lever, some projections rise up in the shape of a hairpin which, with two slots made on their inner faces in a diagonal direction, allow the fitting of the attachment pivots and the swinging of the lever.

The following components are housed on the inside of its body: a rod that has a rectangular longitudinal hole on its bottom inner part and on its top part a cylindrical head made up on its inner part by a sloping plane as a valve. A second disk for closure is formed by a cylindrical body finished at its bottom part inferior by a sloping plane as a valve seating. In the middle of its wall it has a somewhat rectangular hole through which the first disk is joined by means of the axle that cross through it together with a third disk made up of the same characteristics as the previous one, it houses the two previous disks on its inside and it is characterised because apart from having the rectangular longitudinal slot more pronounced than the one in the second disk, on the side opposite to the water inlet it has a rectangular hole in a transversal direction with a length equal to that of the water inlet, which will be the one that will allow the water to flow that it will release in the second time. In the bottom parts of disks 2 and 3 there is a flat base around the hole through which the rod crosses and through which the water is also released to the outside, in which the flat seal rubbers are housed and protected in their sinking by a circular projection in the hole which limits the sinking of the rubber. The rod is passed through the hole in the second and third disks and through the one in the cover. Then the axle is introduced into the guide slots with the position of the second disk remaining fixed and, where appropriate, the third disk. Next the support is fitted, on the upper part thereof a flat rubber seal rests that is also protected, the one that acts as a seal joint with the body and also as a seating for the second or third disk. Said support is fitted into the offset made on the surface of the cover and through its hole, with a diameter slightly smaller than that of the second or third disk, the rod penetrates and then through the hole in the cover that in turn acts as a guide for the rod towards the outside, then the cover is joined to the body by means of a thread with the body, with the longitudinal pin remaining in position with the lever.

On the top part of one end, a short-sized lever has a termination in the form of a cam with two projections on its sides that form the pivots for attachment and swinging on the inside of the pin. Through its upper part in its longitudinal centre it has a slot made that leads the water that it receives through the hole in the cover to the inside of the hub and that it will house on its other end. Said lever has some projections on its sides that act as reinforcement by way of a rib on each one of its faces and that are also entrusted with acting as a stop with the hub that penetrates up to its other outer end. A hub with a capacity for 100 to 1,300 cm³ (depending on the model) and in its upper part two holes made in it through which the lever penetrates passing through said hub until hitting the ribs sticking out from the lever with the rear hole. The lever has a hole made in its bottom part through which a rod enters under pressure with a head in order to attach the hub to the lever.

The hub in its lower part has a prolongation that starts off from half way up the hub on the inside of the latter and that covers a third of its surface and it extends to a distance equivalent to the height of the hub. Said prolongation has a cylindrical shape and is open at its bottom, the task of this body is to store atmospheric air so that when the water level in the tank reaches it, it will form a body that tends to float. Said hub is characterised by having a rectangular slot made crossways on its inside and the upper face of the wall, which acts by releasing part of water from inside the hub when the latter rises to its maximum height pushed by the water in the tank itself and also by the air that it stores which pushes it.

So as to facilitate the explanation and understanding of all and everything that is described in the present description, some drawings are attached in which, merely by way of an example, a practical case is shown for manufacturing the maximum security hydropneumatic float for tanks.

### On said drawings:

Figure 1 is a front view in a raised section in the position of the water passage closed, corresponding to a model with 3 disks.

In Figure 2, the valve has been broken down, offering a raised section view of all the components that it incorporates inside, with the aim of providing a better understanding of the functioning thereof.

Figure 3 represents a raised section view showing the first disk -15-, the axle -29- that drags in its movements for opening and closure, the second disk - 13- and third disk -7- seen from the front which shows the holes -16- -25- and -24-respectively with different shapes along which the axle -29- slides.

Figure 4 is a raised section front view in the position for open in the flow of the water passage from the network to the tank.

Figure 5 offers a front cross-section view of a large-sized hydropneumatic float for networks over 2.0''' (81 mm outer diameter), a view may be observed of the apparatus in question made up by two or more units attached together to a body with sufficient size to distribute the water from the network to the different units that form it.

Figure 6 represents the second disk for opening and closing with two views, one cut longitudinally and the other in a cross-section showing the guides (62) along which it slides and centres the first disk. Said guides shall be included in the models that are larger than one inch.

### DESCRIPTION OF A PREFERRED IMPLEMENTATION

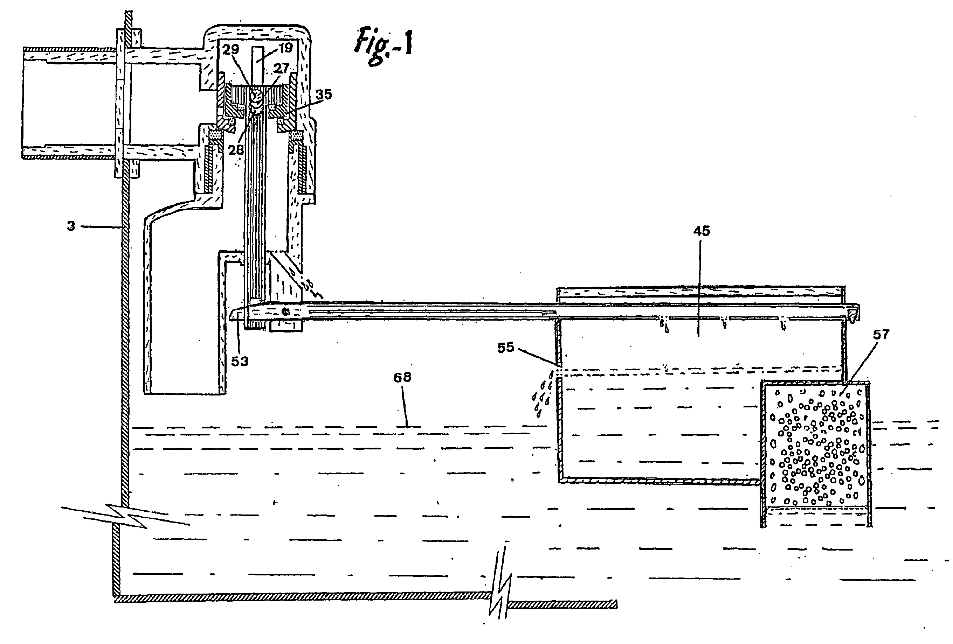

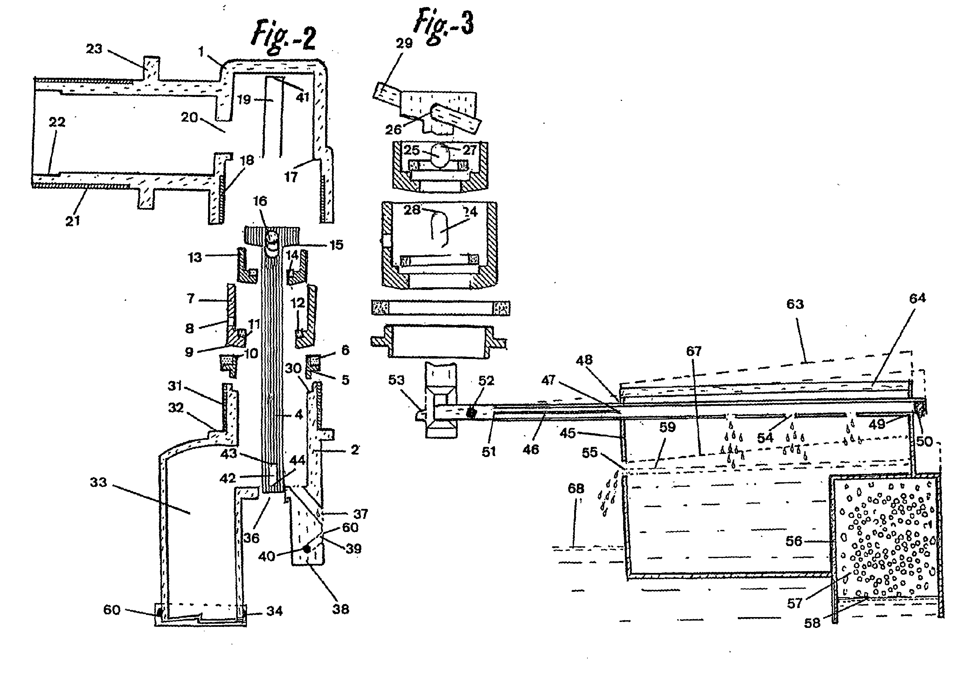

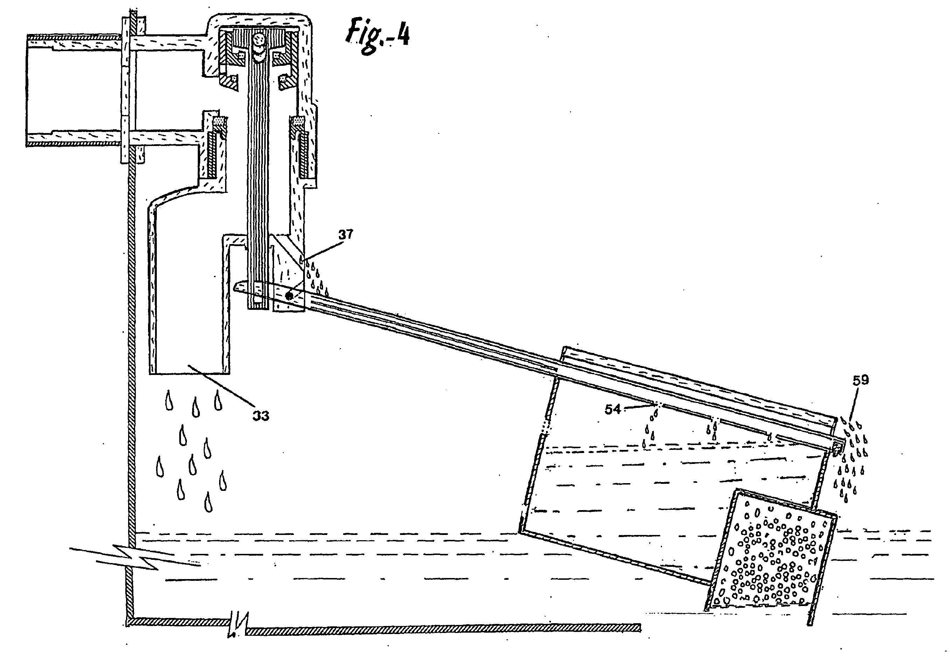

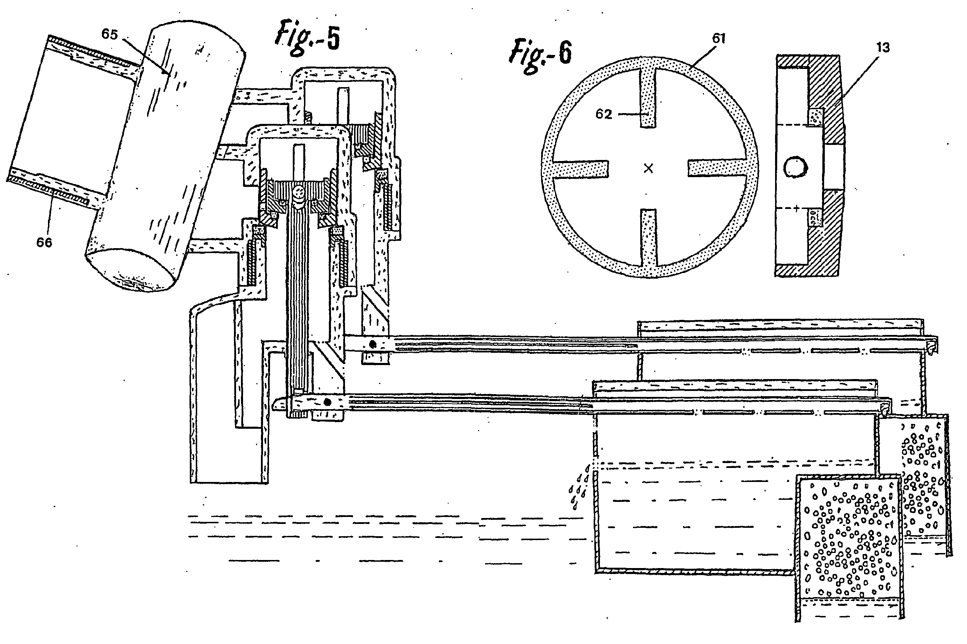

The essential characteristics of the maximum security hydropneumatic float for tanks are: 1, that the closure arises on the inside of the body, thus achieving the highest percentage of water passage at the same time that it cuts it off in times, thereby ensuring that no pressure is produced inside it, 2., that this allows this type of floats to be manufactured completely in plastic, which are larger than those used in the cisterns for WCs, 3, elimination of the ballcock, (which considerably reduces their sizes), 4. it opens and closes off the flow with a total absence of resonance since the rod and the thrust cam are separated when it is closed and 5, it ensures there will be no losses of water in a lifespan greater than that of a household tap, due to the protection that the housing offers them when the rubbers rest, since these limit their sinking. Said protection is produced by the walls of the bases that house them and that are at a height, from the width of the rubber, a few tenths less than the surface area of the latter. According to the drawings (Fig. 1, 2. 3 and 4), Fig. 1. offers a view in which the hydropneumatic float is installed in a tank -3- connected to the network that penetrates into its seating -22- attached by means of a thread -21- that attaches it to the tank between the joint nut and the circular projection on the perimeter - 23-, a body is joined to the cover by means of the threaded parts of both -18- and 31- in their connection they attach the support - 5- that fits into the circular offset -30- on the cover, in the top part of said support it houses a rubber -6-, the cover is joined to the body incorporating said support with a rubber up to the stop for the body -17- and through the lower part of the cover up to its base -32-, on its inside it incorporates the mechanism for opening and closing the water passage that is carried out by means of the rod -4- that goes out to the outside of the cover through the hole -36- in the latter, said drawing represents the position for the water passage being closed off, when the water level -68- drops in the tank, the weight of water that contains the small tank -45- in the form of hub is reinforced in its top part by a projection -64- fitted on the lever -46- which is joined to the hub by passing the hub through its hole -48- and through its hole -49- up to the stop with the rib -51- being attached with the pin -50- it remains ready to perform swinging movements using its pivots -52- introduced through the slots -39- over the bases -40- in the pin -38- attached jointly to the cover, the cam -53- that passes through the rod begins to rise until reaching the upper part -43- placed into the slot -42- of the thrust rod through the action of the force that the weight of the hub is exercising that is full of water up to the level -59- and the rod starts its ascent and that of the axle -29- which crosses through it through its hole -26- caused it to lift up from its seating -15- and the first time for opening the water occurs that it performs with the volume that enters through the clearances -35- in the set and that said volume is equivalent to the flow that it has absorbed in order to release the water to the outside therefore preventing the formation of pressure on the inside of the body, the axle continues to rise through the slots -19- made lengthways on the inside of the body and through the rectangular hole -25- in the second disk for closure -13- until reaching the upper part -27- of this second disk, by pushing it and separating it from its seating -9- a few tenths of an inch still without opening up a water passage and hence with a lack of pressure on the inside of the body until covering a few more tenths of an inch in order to start opening the water passage -8-in the third disk -7-, whilst it continues its rise through the rectangular hole -24-until reaching its upper panel -28-, the time when it would have left the outlet passage of the third disk open and pumping all the water that is entering the body to the outside both through the clearances and through the window in the third disk and therefore with a lack of pressure on the inside, thus starting to lift it from its seating -9- and with this third disk covering a few tenths of an inch the same as the previous ones without yet opening the water passage and therefore without pressure on the inside, it starts to open the outlet -20- up to its final run for the axle -41- with the complete opening , in that position the water passage that penetrates the body is opened in full, the water pours out through the outlet pipe -33- that passes into the silencer pipe -60- which has attached under pressure in its outlet and fitted on its perimeter projection -34-, another water outlet in the cover provides a small amount of water through the hole -37-, the latter pours the water into the slot -47- made in the lever, said water flows by gravity (as per Fig. 4) with it being released through the holes -54- and falling into the inside of the hub flowing over from it and the hydropneumatic float will remain that way until the water level in the tank begins its rise until reaching the air chamber -56-, its level -58- and afterwards the hub, with the rise of the level in the tank continuing until the latter equals the upper part of the hub and it starts to rise with the level of the tank breaking down the weight that it exercised before, the instant at which the mass of air -57- expands thereby raising the hub up to its stop -60- reaching the height -63- and with the water rising on its inside up to the position -67 -, the instant at which part of the water pours out through the transversal rectangular hole -55- and the cam will drop by pulling the rod through the bottom part of its slot -44- with the three seal disks dropping, first until the third disk is dropped onto its seating over the rubber -6- and with the drop continuing to the rest of disks with the axle until the second disk is dropped onto its seating -12- that is housed on the base -11- and finally, the first disk onto its seating on the rubber -14-, at that instant the seal for the water passage of the network has been closed as is shown in the drawing in (Fig., 1). The part of water that has been released from the hub manages to ensure that no resonance arises at all even with a drop in the pressure in the network, even when practically dropping to zero and if the pressure in the network should increase up to a pressure considered to be high, over 9 Kg./cm², the opening of the disks will take place when the water level in the tank drops below the air chamber, the time when the hub reaches its maximum weight. In (Fig. 5 and 6) the body -65- is shown that acts as a collector for housing two or more units so as to obtain a float set for larger passages in networks than 2.5" (81 mm outer diameter) which by means of its thread -66- is connected to the network, another view in a cross-section -61- of the second disk shows the guides - 62- that the first disk houses, said disk is used in apparatus larger than 1 1/4" (40.5 mm outer diameter).

Hence the materials used in the manufacture of the components of the maximum security hydropneumatic float for tanks, shapes and sizes thereof and all the supporting details that may be presented will be independent of the object of the invention, provided that they do not affect its essential nature.

The following is claimed as the Object of the present patent of invention:

## Claims

1. Maximum-security hydropneumatic float for tanks. It is characterised because on the inside of the body of the valve it houses a set of disks with each one acting as a valve and cutting off the water passage, at the same time that it also regulates the passage of the water that penetrates into the inside of the body so that it releases the same amount to the outside that penetrates in each one of its times and preventing any pressure from being able to form in its inside. Said disks are joined together by an axle (29) which positions and drags them with it, sliding with them through the slots (19) made on the inside of the body in both directions lengthways with the body and that prevents them from making circular movements. The first disk (15) has a hole in its upper part that passes through it crosswise and in which the axle penetrates. The second disk (13) has another hole on its side also in order for the axle to be able to penetrate, with said hole having a rectangular shape in a lengthways direction and a third disk (7) that, the same as the previous one, has a rectangular lengthways hole that is longer, this disk has an outlet passage on its lateral face that goes through its wall (8) in the shape of a crosswise rectangle and that when it rises up in the last time for opening it faces the inlet. The axle that joins the three disks together is pushed by the rod that opens the first time equivalent to the same water that has penetrated through the clearances in the disks into the inside, the following disks shall go on opening as the rod continues to push them and although their diameters are progressive with respect to the first one, the movements for lifting them up from their seatings are performed without pressure on the inside of the body of the apparatus and therefore no increase in force arises that prevents them from being lifted up from them seatings. This is due to the fact that when the first disk lifts up, it opens a water passage equivalent to that used for WCs measuring 3/8" (17 mm outer diameter) and releases the water from the inside that is equal to the amount that may penetrate through the clearances present between the disks and the inner diameter of the body in which they are housed, since the water passages in both the second disk and the third disk remain closed. The second disk, when the axle reaches the end of the upper space (27) of its hole, forces it to lift up from its seating running a few tenths of an inch through the free space in the hole of the third disk (24). Next it starts opening up the water passage in the outlet (8) made in the third disk until fully opening. The water that penetrates the inside of the body at that instant is being released to the outside in full without pressure being able to form on the inside of the body The axle continues its rise and once it reaches the end of the upper space (28) -the same as in the previous time. It will push this third disk leaving it on its seating in order to run a few millimetres without the pressure having increased and next it will open the inlet for the network (20) until reaching the end of the run for the guides (19), the instant in which the whole water passage for the network will be opened to the tank with no pressure on the inside of the body of the "float".

2. Maximum security hydropneumatic float for tanks according to Claim 1., that a hub attached to the outer end of its short lever jointly houses a body in the shape of a small-sized hub and which occupies a third of the bottom part of the hub (45) and spreads out underneath the surface with an opening through its bottom part (56) in which it houses atmospheric air in its inner cavity so as to act as a float when the water level in the tank is reached by the hub. It is essentially **characterised by** having a hole made in it (55) that goes through the wall of the back face of the hub and in a crossways direction therein, so that when the action of the water level in the tank (68) and the force that the air chamber provides begins to raise it, the hub rises up to its stop (63) and the water level in the hub remains sloping towards the rear part, the instant when part of the water will begin to be released from the hub through the outlet (55) and leaving the hub with less weight. At that instant, the hub pushes in an emerging action and drags the cam from the rod in the opposite direction to that which it exercises in its opening until leaving a gap of a few tenths of an inch between the cam and the rod. Hence it will remain idle thereby preventing oscillations on the seatings of the valves and making it impossible to change without pressure or even cuts in the supply in the network that may have repercussions on the seatings of the valves, and therefore preventing the pressure surge and the resonance. Since said valves will only be moved by the thrust action of the cam on the rod, something that may only occur when the -fast or slow- drop begins for the water level in the tank and the weight of the hub may exercise its force to push the rod and begin to lift the disks up from their seatings thus starting a new cycle for opening.
